# EUROPÄISCHE PATENTSCHRIFT

(11) **EP 3 421 271 B1**
(45) Veröffentlichungstag und Bekanntmachung des Hinweises auf die Patenterteilung: **22.07.2020**
(21) Anmeldenummer: 18175921.8
(22) Anmeldetag: 05.06.2018
(51) Int. Cl.: B60C 23/04, H01Q 1/22, H01Q 1/38, H01Q 7/00

(54) **REIFENDRUCKÜBERWACHUNGSEINHEIT**
TYRE PRESSURE MONITORING DEVICE
UNITÉ DE SURVEILLANCE DE PRESSION DES PNEUS

(30) Priorität: 30.06.2017 DE 102017114721
(43) Veröffentlichungstag der Anmeldung: 02.01.2019
(73) Patentinhaber: Huf Baolong Electronics Bretten GmbH, 75015 Bretten (DE)
(72) Erfinder: Wagner, Markus, 71638 Ludwigsburg (DE); Nguyen, Van Hieu, 31141 Hildesheim (DE)
(74) Vertreter: Twelmeier Mommer & Partner

(56) Entgegenhaltungen:
- EP-A1- 1 632 880
- WO-A1-2016/072831
- WO-A1-2017/014991
- DE-A1-102012 004 333
- JP-A- 2005 254 900

## Beschreibung

Die Erfindung geht aus von einer Reifendrucküberwachungseinheit mit den im Oberbegriff des Anspruchs 1 angegebenen Merkmalen, wie sie beispielsweise aus der WO2016/072831 A1 bekannt ist.

Reifendrucküberwachungseinheiten, wie sie beispielsweise auch aus DE 199 39 936 A1, WO 2017/014991 A1, JP 2005 254900 A, DE 10 2012 004333 A1 und EP 1 632 880 A1 bekannt sind, enthalten einen Drucksensor zum Messen des Reifendrucks und eine Antennenschaltung zum Senden von Druckdaten. Derzeit gebräuchliche Reifendrucküberwachungseinheiten senden Druckdaten im 433 MHz-Bereich. Daneben sind auch Reifendrucküberwachungseinheiten bekannt, die Druckdaten stattdessen im 315 MHz-Bereich oder im 868 MHz-Bereich aussenden. Die Antennenschaltung einschließlich der dazugehörenden Antenne verursacht einen erheblichen Teil der Herstellungskosten einer Reifendrucküberwachungseinheit. Zudem entfällt auf die Sendetätigkeit einer Reifendrucküberwachungseinheit der größten Teil ihres Energiebedarfs.

Aufgabe der vorliegenden Erfindung ist es deshalb, einen Weg aufzuzeigen, wie eine Reifendrucküberwachung hinsichtlich ihrer Sendeeinrichtung weiter verbessert werden kann.

Diese Aufgabe wird durch eine Reifendrucküberwachungseinrichtung mit den im Anspruch 1 genannten Merkmalen gelöst. Vorteilhafte Weiterbildungen der Erfindung sind Gegenstand von Unteransprüchen.

Eine erfindungsgemäße Reifendrucküberwachungseinrichtung ist dafür eingerichtet Druckdaten mittels Bluetooth-Low-Energy Technik (im Folgenden Bluetooth LE) zu übertragen.

Bluetooth LE ist ein Industriestandard zur drahtlosen Übertragung von Daten im 2,4 GHz-Bereich. Dabei wird das ISM-Frequenzband bei 2,4 GHz in 40 Kanäle mit einer Breite von jeweils 2 MHz unterteilt. Daten werden als Pakete oder Telegramme übertragen, die auf einem dieser Kanäle gesendet werden, wobei nach jedem Paket oder Telegramm der Kanal gewechselt werden muss. Jedes Paket beginnt mit einer Bluetooth-LE Kennung von 8-Bit, gefolgt von einer 32-Bit Zugriffskennung, vor den maximal 39 Byte Nutzdaten und einer 24-Bit Prüfsumme.

Die Größe eines Datenpakets bei Bluetooth LE entspricht somit der Größe eines typischen Datenpakets, wie es typischer Weise von einer herkömmlichen Reifendrucküberwachungseinrichtungen übertragen wird, um Temperatur- und Druckdaten zu übermitteln. Bluetooth LE ist deshalb sehr gut für die Sendetätigkeit von Reifendrucküberwachungseinrichtungen geeignet. Hinzu kommen eine vorteilhaft niedrige Sendeenergie und eine kostengünstige Fertigung von entsprechenden Antennenschaltungen, da diese bzw. deren wesentliche Elemente in sehr großer Zahl für unterschiedlichste Anwendungen benötigt werden.

Eine Besonderheit der Sendeeinrichtung einer erfindungsgemäßen Reifendrucküberwachungseinheit besteht darin, dass diese eine Antennenschaltung mit einer Bügelantenne aufweist, deren Enden an der Leiterplatte befestigt sind. In einer Reifendrucküberwachungseinheit steht für eine Antenne nur ein Bauraum mit einer Länge von wenigen Zentimetern zur Verfügung. Für einen Frequenzbereich von 2,4 GHz sind deshalb magnetische Antennen, insbesondere Bügelantennen, aus geometrischen Gründen besonders gut zur Übertragung von Funksignalen geeignet.

Eine vorteilhafte Weiterbildung der Erfindung sieht vor, dass sich die Bügelantenne entlang einer Diagonalen der Leiterplatte erstreckt. Auf diese Weise kann der vorhandene Bauraum in dem Gehäuse einer Reifendrucküberwachungseinrichtung besonders effizient ausgenutzt werden, um eine Bügelantenne mit einer ausreichend großen Länge für Übertragungen im Frequenzbereich von 2,4 GHz zu ermöglichen.

Die Enden der Bügelantenne können einfach auf die Leiterplatte aufgelötet sein. Bevorzugt sind die Enden der Bügelantenne aber in die Leiterplatte gesteckt, da sich auf diese Weise eine mechanisch zuverlässigere Verbindung realisieren lässt, was wegen der in einem Reifen auftretenden hohen Kräfte ein wichtiger Vorteil ist. Diese Steckverbindung kann zusätzlich durch eine Lötverbindung gesichert sein. Um die Qualität der Steckverbindung weiter zu verbessern kann jedes Ende der Bügelantenne mehrere Stifte aufweisen, die in passende Bohrungen der Leiterplatte gesteckt sind.

Eine weitere vorteilhafte Weiterbildung der Erfindung sieht vor, dass die Bügelantenne ein Blechstreifen ist. Die Bügelantenne kann beispielsweise von einem Stück Draht gebildet sein, jedoch hat ein Blechstreifen eine größere mechanische Stabilität. Dies gilt insbesondere, wenn der Blechstreifen eine Sicke aufweist, insbesondere eine Längssicke. Der die Bügelantenne bildende Blechstreifen kann einen Hauptabschnitt haben, der parallel zu der Leiterplatte verläuft. Eine Längssicke ist insbesondere in einer an den Hauptabschnitt anschließenden Krümmung zur mechanischen Stabilisierung vorteilhaft. Der Hauptabschnitt kann einen verbreiterten Bereich aufweisen, insbesondere in seiner Mitte. Ein Ende der Längssicken liegt dann bevorzugt in dem Hauptabschnitt zwischen dem verbreiterten Bereich und der nächstgelegenen Krümmung, das andere Ende der Längssicke von dem Hauptabschnitt aus gesehen hinter der Krümmung.

Eine weitere vorteilhafte Weiterbildung der Erfindung sieht vor, dass die Leiterplatte zusätzlich eine zweite Antennenschaltung trägt, die zum Senden von Druckdaten in einem Frequenzbereich von 433 MHz mittels der Bügelantenne ausgebildet ist, und die Reifendrucküberwachungseinheit eine Steuerschaltung enthält, die auswählt mittels welcher der beiden Antennenschaltungen Druckdaten ausgesendet werden sollen. Auf diese Weise kann die Reifendrucküberwachungseinrichtung wahlweise auch bei herkömmlichen Reifendrucküberwachungssystem eingesetzt werden, bei denen Druckdaten im Frequenzbereich von 433 MHz übertragen werden. Reifendrucküberwachungseinrichtung kann also beispielsweise auch verwendet werden, um eine Reifendrucküberwachungseinheit eines herkömmlichen Reifendrucküberwachungssystems zu ersetzen, das aus einer Reifendrucküberwachungseinheit pro Fahrzeugreifen und einer Zentraleinheit besteht.

Weitere Einzelheiten und Vorteile der Erfindung werden an einem Ausführungsbeispiel unter Bezugnahme auf die beigefügten Zeichnungen erläutert. Gleiche und einander entsprechende Komponenten sind darin mit übereinstimmenden Bezugszeichen versehen. Es zeigen:
Fig. 1 eine schematische Darstellung einer Reifendrucküberwachungseinrichtung mit transparentem Gehäuse; und

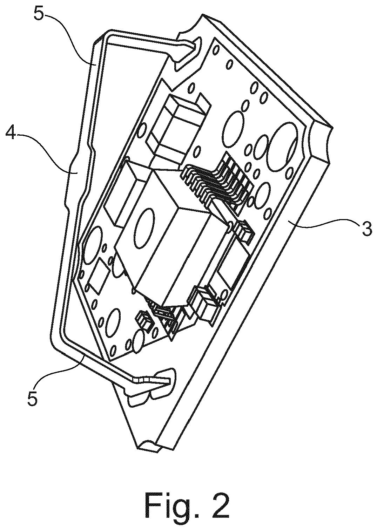

Fig. 2 eine schematische Darstellung der Leiterplatte der gezeigten Reifendrucküberwachungseinrichtung mit Antennenschaltung und Bügelantenne.

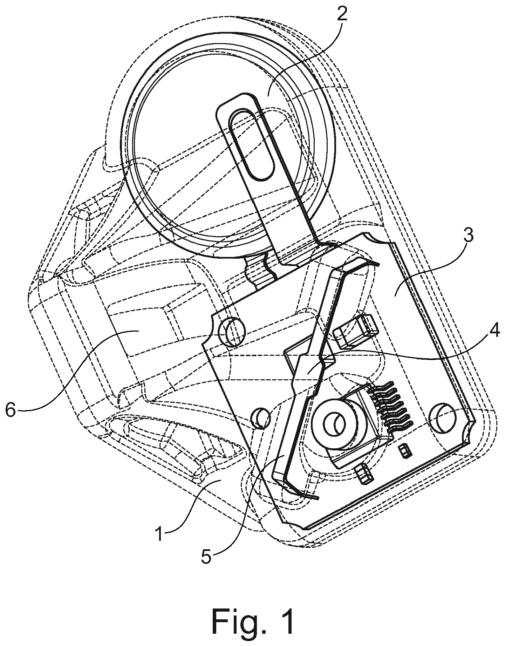

Die in Fig. 1 schematisch dargestellte Reifendrucküberwachungseinheit hat ein Gehäuse 1 aus Kunststoff, in dem eine Stromquelle 2, beispielsweise eine Batterie oder ein Generator, und eine Leiterplatte 3 angeordnet sind. Die Leiterplatte 3 trägt Druck- und Temperatursensoren, eine Steuerungseinheit, beispielsweise einen Mikrokontroller, und eine Sendeeinrichtung, die eine Antennenschaltung mit einer Bügelantenne 4 aufweist, zum Aussenden von Druck- und Temperaturdaten.

Die Sendeeinrichtung mit der Antennenschaltung und der Bügelantenne 4 sind dafür ausgelegt, Druck- und Temperaturdaten mittels Bluetooth LE Technik zu übertragen, also Druck- und Temperaturdaten in Datenpaketen drahtlos nach dem Bluetooth LE Standard auszusenden. Die beiden Enden der Bügelantenne 4 sind in die Leiterplatte 3 gesteckt. Die Bügelantenne 4 hat dazu an jedem ihrer Enden mehrere Steckkontakte, die in passende Bohrungen der Leiterplatte 3 gesteckt sind. Die Steckkontakte können als Einpresskontakte ausgebildet sein oder zusätzlich durch Verlöten gesichert sein.

Die Bügelantenne 4 hat bei dem dargestellten Ausführungsbeispiel einen Hauptabschnitt der parallel zu der Leiterplatte 3 verläuft, kann aber auch anders geformt sein. An den Hauptabschnitt schließen auf beiden Seiten Endabschnitte an, die schräg oder gekrümmt zu der Leiterplatte 3 verlaufen. Die Bügelantenne 4 ist ein Blechstreifen, der zu seiner Versteifung mit einer oder mehreren Längssicken 5 versehen ist. Die Längssicken 5 erstrecken sich von dem Hauptabschnitt auf beiden Seiten in einen an den Hauptabschnitt anschließenden gekrümmten Abschnitt, beispielsweise einen Endabschnitt, und bewirken eine mechanische Versteifung des Blechstreifens, der die Bügelantenne 4 bildet.

Der Hauptabschnitt kann in seiner Mitte verbreitert sein. Die Längssicken 5 können vor einem solchen verbreiterten Bereich des Hauptabschnitts enden.

Wie Figur 1 zeigt, kann sich die Bügelantenne 4 entlang einer Diagonalen der im Wesentlichen viereckig geformten Leiterplatte 3 erstrecken. Wenn die Reifendrucküberwachungseinheit, wie das dargestellte Ausführungsbeispiel, zur Montage an einem Reifenventil vorgesehen ist, ist die Bügelantenne 4 in dem Gehäuse 1 bevorzugt so angeordnet, dass sie mit der Achse des Reifenventils einen Winkel von 40° bis 50° einschließt, wenn das Gehäuse 1 auf den Schaft des Reifenventils aufgesteckt ist. Bei dem dargestellten Ausführungsbeispiel hat das Gehäuse 1 eine Öffnung 6, durch die im montierten Zustand der Schaft des Reifenventils hindurchragt.

Die Leiterplatte 3 bildet die Massefläche zu der Bügelantenne 4. Um die Abstrahleigenschaften der Bügelantenne 4 zu verbessern, kann die Massefläche an einem der Enden des Bügels ausgespart sein, insbesondere kann ein Eckabschnitt der Leiterplatte 3 ausgespart sein. Mit anderen Worten ist die Leiterplatte 3 also an einen Bereich um ein Ende der Bügelantenne 4 herum nicht flächig metallisiert, sondern weist dort nur Leiterbahnen zum elektrischen Kontaktieren der Bügelantenne 4 auf.

Die Leiterplatte 3 kann ein- oder beidseitig bestückt sein. Bevorzugt ist die Leiterplatte 3 beidseitig bestückt, damit der vorhandene Bauraum besser ausgenutzt werden kann. Bei dem dargestellten Ausführungsbeispiel trägt die Leiterplatte 3 zusätzlich eine zweite Antennenschaltung, die zum Senden von Druckdaten in einem Frequenzbereich von 433 MHz mittels der Bügelantenne 4 ausgebildet ist. Die Steuerung der Reifendrucküberwachungseinheit wählt dabei aus, welcher der beiden Antennenschaltungen Druckdaten ausgesendet werden sollen, also entweder bei 2,4 GHz mittels Bluetooth LE oder im Frequenzbereich von 433 MHz.

## Patentansprüche

1. Reifendrucküberwachungseinheit mit
einem Drucksensor zum Messen des Reifendrucks und
einer Leiterplatte (3), die eine Antennenschaltung zum Senden von Druckdaten trägt, wobei die Antennenschaltung dafür eingerichtet ist, Druckdaten mittels Bluetooth-Low-Energy Technik zu übertragen, **dadurch gekennzeichnet, dass** die Antennenschaltung zur Übertragung der Druckdaten eine Bügelantenne (4) aufweist, deren Enden an der Leiterplatte (3) befestigt sind.

2. Reifendrucküberwachungseinheit nach Anspruch 1, **dadurch gekennzeichnet, dass** sich die Bügelantenne (4) entlang einer Diagonalen der Leiterplatte (3) erstreckt.

3. Reifendrucküberwachungseinheit nach einem der vorstehenden Ansprüche, **dadurch gekennzeichnet, dass** die Enden der Bügelantenne (4) in der Leiterplatte (3) stecken.

4. Reifendrucküberwachungseinheit nach einem der vorstehenden Ansprüche, **gekennzeichnet durch** ein Gehäuse (1), das eine Öffnung zum Aufstecken auf einen Schaft eines Reifenventils aufweist, wobei die Bügelantenne (4) in dem Gehäuse (1) so angeordnet ist, dass sie mit der Achse des Reifenventils einen Winkel von 40° bis 50° einschließt, wenn das Gehäuse (1) auf den Schaft des Reifenventils aufgesteckt ist.

5. Reifendrucküberwachungseinheit nach einem der vorstehenden Ansprüche, **dadurch gekennzeichnet, dass** die Leiterplatte (3) eine metallisierte Massefläche aufweist, wobei in wenigstens einer Ecke der Leiterplatte (3), in der ein Ende der Bügelantenne (4) angeordnet ist, die Leiterplatte (3) nicht metallisiert ist.

6. Reifendrucküberwachungseinheit nach einem der vorstehenden Ansprüche, **dadurch gekennzeichnet, dass** die Leiterplatte (3) beidseitig bestückt ist.

7. Reifendrucküberwachungseinheit nach einem der vorstehenden Ansprüche, **dadurch gekennzeichnet, dass** die Bügelantenne (4) einen Hauptabschnitt aufweist, der parallel zu der Leiterplatte (3) verläuft.

8. Reifendrucküberwachungseinheit nach einem der vorstehenden Ansprüche, **dadurch gekennzeichnet, dass** die Bügelantenne (4) ein Blechstreifen mit einer Sicke (5), vorzugsweise einer Längssicke, ist.

9. Reifendrucküberwachungseinheit nach Anspruch 7 und 8, **dadurch gekennzeichnet, dass** an den Hauptabschnitt auf beiden Seiten eine Krümmung anschließt und sich die Sicke (5) oder eine der Sicken (5) über die jeweilige Krümmung hinaus in den Hauptabschnitt hinein erstreckt.

10. Reifendrucküberwachungseinheit nach einem der vorstehenden Ansprüche, **dadurch gekennzeichnet, dass** die Leiterplatte (3) zusätzlich eine zweite Antennenschaltung trägt, die zum Senden von Druckdaten in einem Frequenzbereich von 433 MHz mittels der Bügelantenne ausgebildet ist, und
die Reifendrucküberwachungseinheit eine Steuerschaltung enthält, die auswählt mittels welcher der beiden Antennenschaltungen Druckdaten ausgesendet werden sollen.

## Claims

1. A tyre pressure monitoring unit comprising
a pressure sensor for measuring tyre pressure and
a printed circuit board (3), which carries an antenna circuit for sending pressure data, wherein the antenna circuit is set up to transmit pressure data by means of Bluetooth low-energy technology, **characterized in that** the antenna circuit for transmitting the pressure data comprises a bracket-shaped antenna (4), the ends of which are attached to the circuit board (3).

2. The tyre pressure monitoring unit according to claim 1, **characterized in that** the bracket-shaped antenna (4) extends along a diagonal of the printed circuit board (3).

3. The tyre pressure monitoring unit according to any one of the preceding claims, **characterized in that** the ends of the bracket-shaped antenna (4) have been inserted into the printed circuit board (3).

4. The tyre pressure monitoring unit according to any one of the preceding claims, **characterized by** a housing (1), which comprises an opening for attaching to a shaft of a tyre valve, wherein the bracket-shaped antenna (4) is arranged in the housing (1) in such a way that it forms a 40° to 50° angle with the axis of the tyre valve when the housing (1) is plugged onto the shaft of the tyre valve.

5. The tyre pressure monitoring unit according to any one of the preceding claims, **characterized in that** the printed circuit board (3) has a metallized ground plane, wherein the printed circuit board (3) is not metallized in at least one corner of the circuit board (3), in which one end of the bracket-shaped antenna (4) is arranged.

6. The tyre pressure monitoring unit according to any one of the preceding claims, **characterized in that** the printed circuit board (3) is populated on both sides.

7. The tyre pressure monitoring unit according to any one of the preceding claims, **characterized in that** the bracket-shaped antenna (4) comprises a main section that runs parallel to the printed circuit board (3).

8. The tyre pressure monitoring unit according to any one of the preceding claims, **characterized in that** the bracket-shaped antenna (4) is a sheet metal strip with a bead (5), preferably a longitudinal bead.

9. The tyre pressure monitoring unit according to Claim 7 and 8, **characterized in that** a curvature abuts the main section on both sides and the bead (5) or one of the beads (5) extends beyond the respective curvature into the main section.

10. The tyre pressure monitoring unit according to any one of the preceding claims, **characterized in that** the printed circuit board (3) additionally carries a second antenna circuit, which is designed to send pressure data at a frequency range of 433 MHz by means of the bracket-shaped antenna, and
the tyre pressure monitoring unit contains a control circuit, which selects by means of which of the two antenna circuits pressure data should be transmitted.

## Revendications

1. Ensemble de supervision de la pression des pneus, comportant
un capteur de pression destiné à mesurer la pression des pneus et
une carte de circuit imprimé (3), qui porte un circuit d'antenne, destiné à envoyer des données de pression, le circuit d'antenne étant aménagé pour transmettre des données de pression par technique Bluetooth Low Energy, **caractérisé en ce que** pour la transmission des données de pression, le circuit d'antenne comporte une antenne en arc (4) dont les extrémités sont fixées sur la carte de circuit imprimé (3).

2. Ensemble de supervision de la pression des pneus selon la revendication 1, **caractérisé en ce que** l'antenne en arc (4) s'étend le long d'une diagonale de la carte de circuit imprimé (3).

3. Ensemble de supervision de la pression des pneus selon l'une quelconque des revendications précédentes, **caractérisé en ce que** les extrémités de l'antenne en arc (4) sont enfichées dans la carte de circuit imprimé (3).

4. Ensemble de supervision de la pression des pneus selon l'une quelconque des revendications précédentes, **caractérisé par** un boîtier (1), qui comporte un orifice destiné à s'emboîter sur une tige d'une valve de pneu, l'antenne en arc (4) étant placée dans le boîtier (1) de sorte à inclure avec l'axe de la valve de pneu un angle de 40° à 50° lorsque le boîtier (1) est emboîté sur la tige de la valve de pneu.

5. Ensemble de supervision de la pression des pneus selon l'une quelconque des revendications précédentes, **caractérisé en ce que** la carte de circuit imprimé (3) comporte une surface de masse métallisée, la carte de circuit imprimé (3) n'étant pas métallisée dans au moins un coin de la carte de circuit imprimé (3), dans lequel est placée une extrémité de l'antenne en arc (4).

6. Ensemble de supervision de la pression des pneus selon l'une quelconque des revendications précédentes, **caractérisé en ce que** la carte de circuit imprimé (3) est équipée sur les deux faces.

7. Ensemble de supervision de la pression des pneus selon l'une quelconque des revendications précédentes, **caractérisé en ce que** l'antenne en arc (4) comporte un segment principal, qui s'écoule à la parallèle de la carte de circuit imprimé (3).

8. Ensemble de supervision de la pression des pneus selon l'une quelconque des revendications précédentes, **caractérisé en ce que** l'antenne en arc (4) est une bande de tôle pourvue d'une moulure (5), de préférence d'une moulure longitudinale.

9. Ensemble de supervision de la pression des pneus selon la revendication 7 et 8, **caractérisé en ce que** sur le segment principal se raccorde sur les deux faces une courbure, et la moulure (5) ou l'une des moulures (5) s'étend au-delà de la courbure respective à l'intérieur du segment principal.

10. Ensemble de supervision de la pression des pneus selon l'une quelconque des revendications précédentes, **caractérisé en ce que** la carte de circuit imprimé (3) porte en supplément un deuxième circuit d'antenne, qui est conçu pour émettre des données de pression dans une gamme de fréquences de 433 MHz au moyen de l'antenne en arc, et
l'ensemble de supervision de la pression des pneus comprend un circuit de commande, qui sélectionne au moyen duquel des deux circuits d'antenne des données de pression doivent être émises.
